# EUROPEAN PATENT APPLICATION

(11) **EP 4 592 523 A1**
(43) Date of publication of application: **30.07.2025**
(21) Application number: 24837832.5
(22) Date of filing: 22.10.2024
(51) Int. Cl.: F03D 17/00

(54) **BACKUP POWER SUPPLY CONTROL APPARATUS, SYSTEM, WIND TURBINE, AND METHOD**

(30) Priority: 13.12.2023 CN 202311718766
(71) Applicant: Envision Energy Co., Ltd., Wuxi, Jiangsu 214400 (CN)
(72) Inventor: LIU, Dongdong, Wuxi Jiangsu 214400 (CN); JIN, Mengren, Wuxi Jiangsu 214400 (CN); ZHU, Yuewei, Wuxi Jiangsu 214400 (CN); SONG, Jincai, Wuxi Jiangsu 214400 (CN); ZHU, Beier, Wuxi Jiangsu 214400 (CN)
(74) Representative: Balder IP Law, S.L.
(86) International application number: PCT/CN2024/126429
(87) International publication number: WO 2025/123934

(57) **Abstract**

This application relates to the technical field of wind turbines, and in particular to a standby power supply control device, a system, a wind turbine generator system and a method. The device includes: a nacelle vibration detection unit, configured to monitor vibrations of a nacelle of a wind turbine and send a first vibration signal obtained by monitoring to a standby power supply start/shutdown control unit; and the standby power supply start/shutdown control unit, configured to acquire the first vibration signal, determine a vibration state of blades on the wind turbine according to the first vibration signal and send a start command to a standby power supply when the vibration state is abnormal vibrations. The standby power supply start/shutdown control unit is further configured to acquire comprehensive vibration information, determine a vibration suppression result of the wind turbine according to the comprehensive vibration information and send a shutdown command to the standby power supply when the vibration suppression result is vibration suppression completed so as to drive the standby power supply to shut down. Thereby, this application solves the problems of short continuous high power supply to the wind turbine when facing the risk of blade flutter between hoisting and grid connection, and poor economic efficiency in the prior art.

## Description

### FIELD OF TECHNOLOGY

This application relates to the technical field of wind turbines, and in particular to a standby power supply control device, a system, a wind turbine generator system and a method.

### BACKGROUND

When a long-blade wind turbine is shut down, a combination operating condition of specific wind speed, wind direction and rotor azimuth will cause cumulative vibrations on the blades. Such vibrations may lead to extremely rapid attenuation of blade life, posing a great risk. Typically, the probability of this risk can be greatly reduced by properly regulating a nacelle-wind direction angle or a blade pitch angle of the wind turbine, but this regulation is only possible if the wind turbine receives a sufficient high power supply. However, a standby power supply (including a diesel generator, an energy storage device, etc.) commonly used by the wind turbine can only work continuously for dozens of hours at the current technical level, and the time between hoisting and grid connection can last for several months. This means that the wind turbine cannot receive a continuous and effective high power supply after it is hoisted and before it is connected to the grid.

### SUMMARY

In view of this, embodiments of this application provide a standby power supply control device, a system, a wind turbine generator system and a method, which can effectively solve the problem of short continuous high power supply to the wind turbine when facing the risk of blade flutter between the hoisting and the grid connection in the prior art.

In a first aspect, an embodiment of this application provides a standby power supply control device, including:
a nacelle vibration detection unit and a standby power supply start/shutdown control unit.

The nacelle vibration detection unit is configured to monitor vibrations of a nacelle of a wind turbine and send a first vibration signal obtained by monitoring to the standby power supply start/shutdown control unit.

The standby power supply start/shutdown control unit is configured to acquire the first vibration signal, determine a vibration state of blades on the wind turbine according to the first vibration signal and send a start command to a standby power supply when the vibration state is abnormal vibrations.

The standby power supply start/shutdown control unit is further configured to acquire comprehensive vibration information, determine a vibration suppression result of the wind turbine according to the comprehensive vibration information and send a shutdown command to the standby power supply when the vibration suppression result is vibration suppression completed so as to drive the standby power supply to shut down. The comprehensive vibration information includes the first vibration signal.

In some embodiments, the start command is used for driving the standby power supply to start and supply power to the wind turbine such that the wind turbine performs a vibration suppression action according to a built-in vibration suppression action policy of the wind turbine. The vibration suppression action includes regulating a blade pitch angle or a nacelle-wind direction angle.

The standby power supply start/shutdown control unit is further configured to be communicatively connected to the wind turbine. The comprehensive vibration information includes a second vibration signal and state information obtained by monitoring the wind turbine.

When acquiring the comprehensive vibration information and determining the vibration suppression result of the wind turbine according to the comprehensive vibration information, the standby power supply start/shutdown control unit is specifically configured to:
acquire the first vibration signal obtained by monitoring the vibrations of the nacelle from the nacelle vibration detection unit;
acquire the second vibration signal and/or the state information from the wind turbine; and
determine the vibration suppression result according to the first vibration signal, the second vibration signal and the state information.

In some embodiments, when determining the vibration suppression result according to the first vibration signal, the second vibration signal and the state information, the standby power supply start/shutdown control unit is specifically configured to:
confirm, when a first condition is met, that the vibration suppression result is vibration suppression completed, otherwise, confirm that the vibration suppression result is vibration suppression not completed; where the first condition includes: determining that the vibration state of the blades on the wind turbine is normal vibrations according to the first vibration signal, and/or determining that the vibration state of the blades on the wind turbine is normal vibrations according to the second vibration signal; or
confirm, when the first condition is met and a second condition is met, that the vibration suppression result is vibration suppression completed, otherwise, confirm that the vibration suppression result is vibration suppression not completed; where the second condition includes the blade pitch angle of the wind turbine being in a safe range; and the state information includes the blade pitch angle.

In some embodiments, when determining the vibration state of the blades on the wind turbine, the standby power supply start/shutdown control unit is specifically configured to:
perform frequency domain analysis on the first vibration signal or the second vibration signal to obtain a corresponding vibration index;
determine, if the vibration index is greater than a set index upper threshold, that the vibration state is abnormal vibrations; and
determine, if the vibration index is less than a set index lower threshold, that the vibration state is normal vibrations.

The index upper threshold and the index lower threshold are both set according to a model of the wind turbine.

In some embodiments, the device further includes a storage battery, and the storage battery is configured to supply power to the nacelle vibration detection unit and the standby power supply start/shutdown control unit.

The standby power supply start/shutdown control unit is further configured to drive the standby power supply to charge the storage battery according to a battery first endurance method. The battery first endurance method includes:
setting the standby power supply to automatically start based on predetermined time intervals according to an endurance duration of the storage battery, and setting a run duration of the standby power supply after starting such that the standby power supply periodically charges the storage battery.

In some embodiments, the standby power supply start/shutdown control unit is further configured to drive the standby power supply to charge the storage battery according to a battery second endurance method. The battery second endurance method includes:
acquiring a battery level of the storage battery, and sending the start command or the shutdown command to the standby power supply according to the battery level to start or shut down the standby power supply, so as to charge or stop charging the storage battery.

In some embodiments, the device further includes: photovoltaic panels and a charging/discharging controller added according to the endurance duration of the storage battery. The standby power supply start/shutdown control unit is further configured to drive the standby power supply to charge the storage battery according to a battery third endurance method. The battery third endurance method includes:
driving the charging/discharging controller to store electric energy of the photovoltaic panels into the storage battery, and controlling the photovoltaic panels to supply power to the nacelle vibration detection unit and the standby power supply start/shutdown control unit through the charging/discharging controller; and controlling, when confirming that the photovoltaic panel has no electric energy output, the storage battery to supply power to the nacelle vibration detection unit and the standby power supply start/shutdown control unit through the charging/discharging controller.

In a second aspect, an embodiment of this application provides a power supply system. The power supply system includes a standby power supply and a standby power supply control device provided in the first aspect of this application. The standby power supply control device is configured to control the standby power supply to start or shut down.

The standby power supply is configured to supply power to a wind turbine according to a start command so as to drive the wind turbine to perform a vibration suppression action.

The standby power supply is further configured to shut down according to the shutdown command so as to stop providing electric energy to the wind turbine.

In a third aspect, an embodiment of this application provides a wind turbine generator system. The wind turbine generator system includes a wind turbine and a power supply system provided in the second aspect of this application. The power supply system is configured to supply power to the wind turbine.

In a fourth aspect, an embodiment of this application provides a power supply control method applicable to a standby power supply control device provided in the first aspect of this application. The power supply control method includes:
acquiring a first vibration signal obtained by monitoring vibrations of a nacelle of a wind turbine by a nacelle vibration detection unit, and determining a vibration state of blades on the wind turbine according to the first vibration signal;
sending, if the vibration state is abnormal vibrations, a start command to a standby power supply; and
acquiring comprehensive vibration information, determining a vibration suppression result of the wind turbine according to the comprehensive vibration information, and sending a shutdown command to the standby power supply when the vibration suppression result is vibration suppression completed. The comprehensive vibration information includes the first vibration signal. The shutdown command is used for driving the standby power supply to shut down.

The embodiments of this application have the following beneficial effects:
According to this application, the nacelle vibration detection unit detects the vibrations of the nacelle and obtains the first vibration signal, the vibration state of the blades on the wind turbine is determined according to the first vibration signal, and the standby power supply is controlled to start when the vibration state is abnormal vibrations, so that the standby power supply can be controlled to supply power to the wind turbine and the wind turbine can perform the vibration suppression protection action. The vibration suppression result of the wind turbine is determined according to the acquired comprehensive vibration information, and the shutdown command is sent to the standby power supply upon the completion of the vibration suppression protection action, so as to drive the standby power supply to shut down and stop providing electric energy to the wind turbine. That is, according to this application, the low-power storage battery is used to supply power to the nacelle vibration detection unit, and the high-power standby power supply is started or shut down according to the vibration state, so that the power supply of the wind turbine can be controlled, thereby saving the electric energy of the standby power supply and ensuring the long-time continuous power supply to the wind turbine. Thereby, this application can effectively solve the problem of short continuous high power supply to the wind turbine between the hoisting and the grid connection in the prior art.

### BRIEF DESCRIPTION OF THE DRAWINGS

In order to more clearly illustrate the technical solutions of the embodiments of this application, the accompanying drawings used in the embodiments of this application will be briefly described below. It should be understood that the following accompanying drawings show only certain embodiments of this application, and therefore, should not be considered as limiting the scope. Those of ordinary skill in the art can obtain other related drawings according to these drawings without any creative work.
FIG. 1 shows a first schematic structural diagram of a standby power supply control device according to an embodiment of this application;
FIG. 2 shows a second schematic structural diagram of the standby power supply control device according to an embodiment of this application;
FIG. 3 shows a third schematic structural diagram of the standby power supply control device according to an embodiment of this application;
FIG. 4 shows a fourth schematic structural diagram of the standby power supply control device according to an embodiment of this application;
FIG. 5 shows a schematic structural diagram of a standby power supply system according to an embodiment of this application;
FIG. 6 shows a schematic structural diagram of a wind turbine generator system according to an embodiment of this application;
FIG. 7 shows a flowchart of a power supply control method according to an embodiment of this application;
FIG. 8 shows another flowchart of a power supply control method according to an embodiment of this application; and
FIG. 9 shows a schematic structural diagram of a power supply control software system according to an embodiment of this application.

### Description of symbols of main elements:

110-nacelle vibration detection unit; 120-standby power supply start/shutdown control unit; 130-standby power supply; 140-storage battery; 150-wind turbine; 160-photovoltaic panel; 170-charging/discharging controller; 910-vibration state detection module; 920-start/shutdown control module; 930-vibration suppression result determination module.

### DESCRIPTION OF THE EMBODIMENTS

The technical solutions in embodiments of this application will be clearly and completely described in the following with reference to the accompanying drawings in the embodiments of this application. Apparently, the described embodiments are merely some rather than all of the embodiments of this application.

The components of the embodiments of this application, which are generally described and illustrated in the accompanying drawings herein, may be arranged and designed in a variety of different configurations. Therefore, the detailed description of the embodiments of this application in the accompanying drawings is not intended to limit the protection scope of this application, but merely represents the selected embodiments of this application. All other embodiments obtained by those of ordinary skill in the art based on the embodiments provided in this application without creative work shall fall within the protection scope of this application.

Hereinafter, the terms "including", "having" and cognates thereof, which can be used in various embodiments of this application, are merely intended to indicate specific features, numbers, steps, operations, elements, components or combinations of the foregoing items, and should not be understood as first excluding the presence of one or more other features, numbers, steps, operations, elements, components or combinations of the foregoing items or the possibility of adding one or more other features, numbers, steps, operations, elements, components or combinations of the foregoing items. In addition, the terms "first", "second", "third" and the like are only used for descriptive purposes, and cannot be understood as indicating or implying relative importance.

Unless otherwise defined, all terms (including technical terms and scientific terms) used herein have the same meaning as commonly understood by those of ordinary skill in the art to which the embodiments of this application belong. The terms (such as those defined in dictionaries of general use) will be interpreted as having the same meaning as the contextual meaning in the related art and will not be interpreted as having an idealized meaning or an overly formal meaning unless clearly defined in the embodiments of this application.

Some implementations of this application will be described in detail below with reference to the accompanying drawings. In the case of no conflict, the following embodiments and the features in the embodiments may be combined with each other.

In the prior art, after the installation of the wind turbine generator system is completed, the blades of the wind turbine may flutter before the wind turbine generator system is connected to the grid. The existing electric control technical solution can only reduce the flutter by regulating the nacelle-wind direction angle or rotor pitch angle of the wind turbine on the premise that the wind turbine is electrified. However, under the current technical conditions, it is difficult for the standby power supply to provide long-time continuous power supply for the wind turbine due to the insufficient endurance power. In the prior art, it is impossible to obtain an economical and feasible continuous high power supply. Thereby, this application provides a standby power supply control device, a system, a wind turbine generator system and a method, which can effectively solve the problems of short continuous high power supply to the wind turbine when facing the risk of blade flutter between the hoisting and the grid connection, and poor economic efficiency in the prior art.

The standby power supply control device will be described in detail below with reference to some specific embodiments.

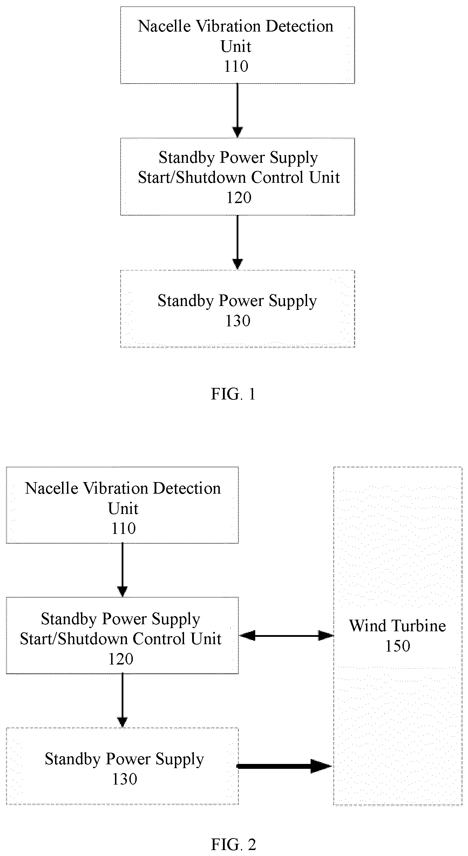

FIG. 1 shows a first schematic structural diagram of the standby power supply control device according to an embodiment of this application. Exemplarily, the standby power supply control device is suitable for controlling the standby power supply to start and shut down. The standby power supply is configured to supply power to the wind turbine such that the wind turbine performs a vibration suppression action according to a built-in vibration suppression action policy of the wind turbine. The standby power supply control device according to this embodiment of this application includes: a nacelle vibration detection unit 110 and a standby power supply start/shutdown control unit 120. The nacelle vibration detection unit 110 and the standby power supply start/shutdown control unit 120 are communicatively connected. Exemplarily, the standby power supply start/shutdown control unit 120 is communicatively connected to the standby power supply 130 through an industrial communication bus, wireless communication, dry contacts, wet contacts or Ethernet. The standby power supply 130 is any energy storage device that can respond to a start command and a shutdown command. For example, the standby power supply 130 is a controller-bearing diesel generator, or a controller-bearing energy storage device based on supercapacitors or fuel cells.

The nacelle vibration detection unit 110 is configured to monitor vibrations of a nacelle of the wind turbine and send a first vibration signal obtained by monitoring to the standby power supply start/shutdown control unit 120. The vibrations of the blade may be transferred to the nacelle, and the vibrations of the blades can be speculated according to the frequency domain distribution of the vibrations of the nacelle, so the first vibration signal can be used for analyzing the vibrations of the blades.

The standby power supply start/shutdown control unit 120 is configured to acquire the first vibration signal, determine a vibration state of blades on the wind turbine according to the first vibration signal and send a start command to the standby power supply 130 when the vibration state is abnormal vibrations. The start command is used for driving the standby power supply 130 to start and supply power to the wind turbine such that the wind turbine performs a vibration suppression action according to a built-in vibration suppression action policy of the wind turbine.

Specifically, the vibration suppression action policy includes a yawing policy and a pitching policy. That is, the wind turbine can suppress vibrations itself by regulating the blade pitch angle or the nacelle-wind direction angle. Generally, the wind turbine is further provided with a vibration detection sensor, and the vibration detection sensor also detects the vibrations of the blades of the wind turbine after receiving power.

The standby power supply start/shutdown control unit 120 is further configured to acquire comprehensive vibration information, determine a vibration suppression result of the wind turbine according to the comprehensive vibration information and send a shutdown command to the standby power supply 130 when the vibration suppression result is vibration suppression completed so as to drive the standby power supply 130 to shut down. The comprehensive vibration information includes the first vibration signal.

In one implementation, in order to improve the accuracy of controlling the standby power supply 130, as shown in FIG. 2, the standby power supply start/shutdown control unit 120 is configured to be communicatively connected to the wind turbine. Generally, whether there is a nacelle vibration detection device or not, the nacelle of the wind turbine is provided with a vibration sensor, and the vibration sensor collects the vibrations of the nacelle of the wind turbine, i.e., a second vibration signal. The comprehensive vibration information includes the second vibration signal obtained by monitoring the wind turbine and the first vibration signal collected by the nacelle vibration detection device.

When acquiring the comprehensive vibration information and determining the vibration suppression result of the wind turbine according to the comprehensive vibration information, the standby power supply start/shutdown control unit 120 is specifically configured to:
acquire the first vibration signal obtained by monitoring the vibrations of the nacelle from the nacelle vibration detection unit 110;
acquire the second vibration signal from the wind turbine; and
determine the vibration suppression result according to the first vibration signal and the second vibration signal.

When determining the vibration suppression result according to the first vibration signal and the second vibration signal, the standby power supply start/shutdown control unit 120 is specifically configured to:
confirm, when a first condition is met, that the vibration suppression result is vibration suppression completed, otherwise, confirm that the vibration suppression result is vibration suppression not completed. The first condition includes: determining that the vibration state of the blades on the wind turbine is normal vibrations according to the first vibration signal, or determining that the vibration state of the blades on the wind turbine is normal vibrations according to the second vibration signal; or the first condition includes: determining that the vibration state of the blades on the wind turbine is normal vibrations according to the first vibration signal, and determining that the vibration state of the blades on the wind turbine is normal vibrations according to the second vibration signal.

In one implementation, in order to improve the accuracy of controlling the standby power supply 130, the standby power supply start/shutdown control unit 120 is configured to be communicatively connected to the wind turbine. The comprehensive vibration information includes the second vibration signal and state information obtained by monitoring the wind turbine. The state information includes pitch angle information.

When acquiring the comprehensive vibration information and determining the vibration suppression result of the wind turbine according to the comprehensive vibration information, the standby power supply start/shutdown control unit 120 is specifically configured to:
acquire the first vibration signal obtained by monitoring the vibrations of the nacelle from the nacelle vibration detection unit 110;
acquire the second vibration signal and the state information from the wind turbine; and
determine the vibration suppression result according to the first vibration signal, the second vibration signal and the state information.

When determining the vibration suppression result according to the first vibration signal, the second vibration signal and the state information, the standby power supply start/shutdown control unit 120 is specifically configured to:
confirm, when the first condition is met and a second condition is met, that the vibration suppression result is vibration suppression completed, otherwise, confirm that the vibration suppression result is vibration suppression not completed. The second condition includes the blade pitch angle of the wind turbine being in a safe range. In other implementations, the state information further includes the nacelle-wind direction angle, and the second condition includes the nacelle-wind direction angle of the wind turbine being in a safe range.

When determining the vibration state of the blades on the wind turbine, the standby power supply start/shutdown control unit 120 is specifically configured to:
perform frequency domain analysis on the first vibration signal or the second vibration signal to obtain a corresponding vibration index;
determine, if the vibration index is greater than a set index upper threshold, that the vibration state is abnormal vibrations; and
determine, if the vibration index is less than a set index lower threshold, that the vibration state is normal vibrations.

The index upper threshold and the index lower threshold are both set according to a model of the wind turbine. For example, when the vibration index is acceleration, some typical acceleration upper thresholds are 0.02 to 0.12 m/s^2.

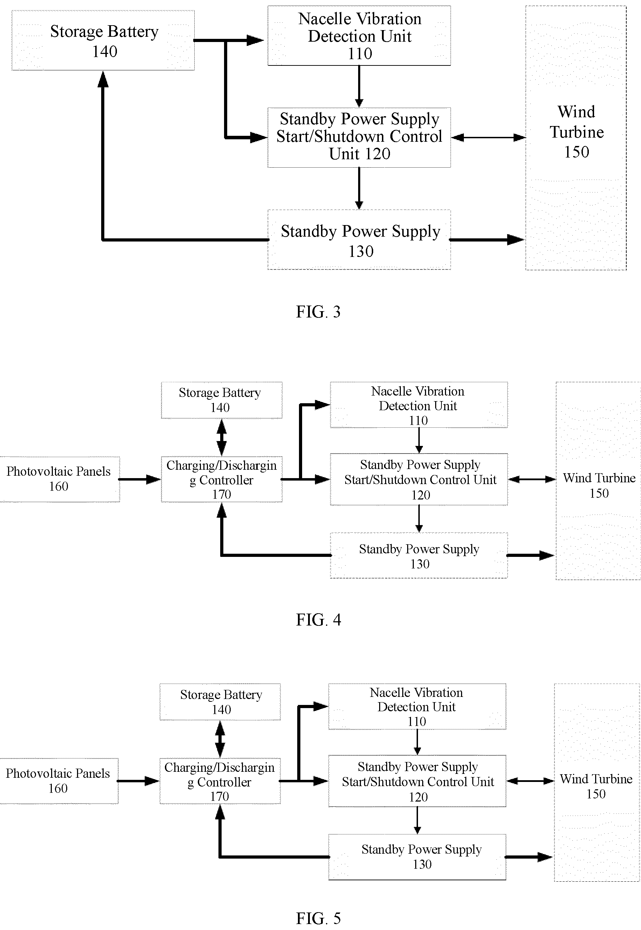

In one implementation, in order to improve the economic efficiency, as shown in FIG. 3, the device further includes a storage battery 140, and the storage battery 140 is configured to supply power to the nacelle vibration detection unit 110 and the standby power supply start/shutdown control unit 120. For example, the storage battery 140 is a lead-acid battery, a lithium battery, a supercapacitor or the like. The storage battery 140 is electrically connected to the nacelle vibration detection unit 110 and the standby power supply start/shutdown control unit 120 respectively.

The standby power supply start/shutdown control unit 120 is further configured to drive the standby power supply 130 to charge the storage battery 140 according to a battery first endurance method, a second endurance method, a third endurance method or a fourth endurance method; or at least two of the endurance methods above are used to charge the storage battery 140.

The battery first endurance method includes:
setting the standby power supply 130 to automatically start based on predetermined time intervals according to an endurance duration of the storage battery 140, and setting a run duration of the standby power supply 130 after starting such that the standby power supply 130 periodically charges the storage battery 140.

The battery second endurance method includes:
acquiring a battery level of the storage battery, and sending the start command or the shutdown command to the standby power supply 130 according to the battery level to start the standby power supply 130 so as to charge the storage battery 140 or shut down the standby power supply 130 so as to stop charging the storage battery 140.

The battery third endurance method is: as shown in FIG. 4, photovoltaic panels 160 and a charging/discharging controller 170 added to the device according to the endurance duration of the storage battery 140. The photovoltaic panels 160 and the storage battery 140 are connected to the charging/discharging controller 170, and the charging/discharging controller 170 is connected to the nacelle vibration detection unit 110 and the standby power supply start/shutdown control unit 120. The photovoltaic panels 160 and the storage battery 140 can provide electric energy to the nacelle vibration detection unit 110 and the standby power supply start/shutdown control unit 120. For example, when the photovoltaic panels 160 have sufficient electric energy in the daytime, the photovoltaic panels 160 charge the storage battery 140, and provide electric energy to the nacelle vibration detection unit 110 and the standby power supply start/shutdown control unit 120 through the charging/discharging controller 170. At night or under the condition of insufficient light energy, the storage battery 140 provides electric energy to the nacelle vibration detection unit 110 and the standby power supply start/shutdown control unit 120 through the charging/discharging controller 170.

The battery fourth endurance method includes: replacing the storage battery 140 manually and periodically. Besides, the standby power supply start/shutdown control unit may acquire the battery level of the storage battery 140, and send, when the battery level is lower than a set threshold, a warning message to a mobile terminal to prompt the replacement of the storage battery 140.

FIG. 5 shows a schematic structural diagram of the power supply system according to an embodiment of this application. Exemplarily, the power supply system includes: a standby power supply 130 and a standby power supply control device according to the embodiment of this application. The standby power supply control device is configured to control the standby power supply 130 to start or shut down.

The standby power supply 130 is configured to supply power to the wind turbine according to the start command so as to drive the wind turbine to perform a vibration suppression action.

The standby power supply 130 is further configured to shut down according to the shutdown command so as to stop providing electric energy to the wind turbine.

It can be understood that the power supply system of this embodiment corresponds to the standby power supply control device of the above embodiment, and the options in the above embodiment are also applicable to this embodiment, so the description will not be repeated here.

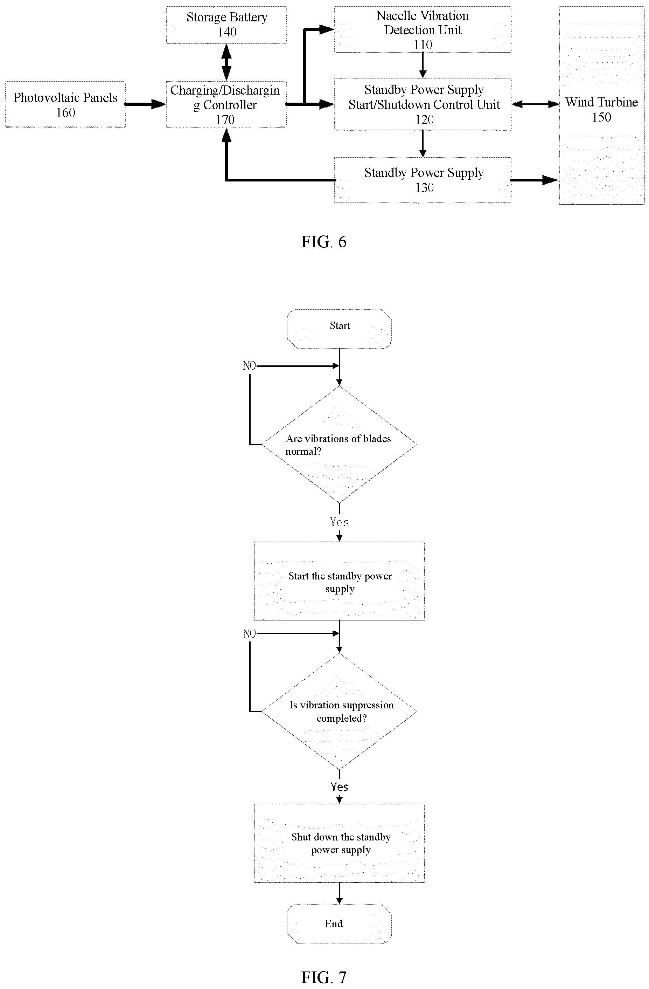

FIG. 6 shows a schematic structural diagram of the wind turbine generator system according to an embodiment of this application. Exemplarily, the wind turbine generator system includes a wind turbine 150 and a power supply system according to the embodiment of this application. The power supply system is configured to supply power to the wind turbine 150.

It can be understood that the wind turbine generator system of this embodiment corresponds to the power supply system of the above embodiment, and the options in the above embodiment are also applicable to this embodiment, so the description will not be repeated here.

A power supply control method according to an embodiment of this application is applicable to a standby power supply start/shutdown control unit 120 in a standby power supply control device.

As shown in FIG. 7, the main idea of the power supply control method according to this embodiment of this application includes: 1) When the standby power supply 130 is shut down, it is first determined whether the vibrations of the blades are normal. If the vibrations of the blades are normal, then monitoring of the vibration state of the blades is continued. 2) If the vibrations of the blades are abnormal, then the standby power supply 130 is started to drive the wind turbine 150 to perform a vibration suppression action. 3) It is determined whether the vibration suppression is completed. If the vibration suppression is not completed, then monitoring of the vibration suppression is continued. 4) If the vibration suppression is completed, then the power supply is shut down.

The power supply control method will be described in detail below with reference to some specific embodiments.

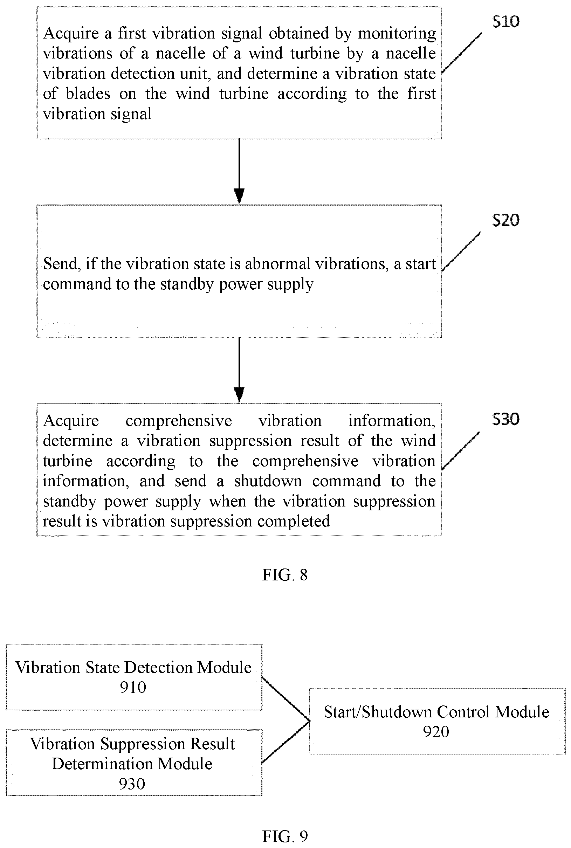

FIG. 8 shows another flowchart of the power supply control method according to an embodiment of this application. Exemplarily, the power supply control method includes steps as follows:
S10: Acquire a first vibration signal obtained by monitoring vibrations of a nacelle of a wind turbine by a nacelle vibration detection unit 110, and determine a vibration state of blades on the wind turbine 150 according to the first vibration signal.

The nacelle vibration detection unit 110 monitors the vibrations of the nacelle in real time to obtain a first vibration signal and send the first vibration signal to the standby power supply start/shutdown control unit 120. The vibration state of the blades on the wind turbine 150 includes abnormal vibrations and normal vibrations.

S20: Send, if the vibration state is abnormal vibrations, a start command to the standby power supply 130, and perform a vibration suppression protection action after the wind turbine 150 receives power from the standby power supply 130. Specifically, the start command is used for driving the standby power supply 130 to start and provide electric energy to the wind turbine 150 so as to wake up the wind turbine 150, and the wind turbine 150 performs the vibration suppression protection action after receiving power from the standby power supply 130. The vibration suppression protection action includes regulating a nacelle-wind direction angle or a blade pitch angle.

The standby power supply 130 starts according to the start command and provides electric energy to the wind turbine 150. After receiving power, the wind turbine 150 may perform the vibration suppression action according to a vibration suppression action policy and monitor the vibrations of the blades of the wind turbine 150. Exemplarily, the wind turbine 150 is provided with a vibration detection sensor, and the vibrations of the blades are detected through the vibration detection sensor to obtain a second vibration signal.

S30: Acquire comprehensive vibration information, determine a vibration suppression result of the wind turbine 150 according to the comprehensive vibration information, and send a shutdown command to the standby power supply 130 when the vibration suppression result is vibration suppression completed. The comprehensive vibration information includes the first vibration signal. The shutdown command is used for driving the standby power supply 130 to shut down so as to stop providing electric energy to the wind turbine 150.

The acquiring the comprehensive vibration information and determining the vibration suppression result of the wind turbine 150 in step S30 includes:
S31: Acquire the first vibration signal obtained by monitoring the vibrations of the nacelle from the nacelle vibration detection unit 110.
S32: Acquire state information and a second vibration signal obtained by monitoring the wind turbine 150 from the wind turbine 150. The state information includes the blade pitch angle.
S33: Determine the vibration suppression result according to the first vibration signal, the second vibration signal and the state information.

Further, the determining the vibration suppression result according to the first vibration signal, the second vibration signal and the vibration information in step S33 includes:
if it is determined that the vibration state of the blades on the wind turbine 150 is normal vibrations according to the first vibration signal, or it is determined that the vibration state of the blades on the wind turbine 150 is normal vibrations according to the second vibration signal, then confirming that the vibration suppression result is vibration suppression completed, otherwise, confirming that the vibration suppression result is vibration suppression not completed; or
if it is determined that the vibration state of the blades on the wind turbine 150 is normal vibrations according to the first vibration signal, and it is determined that the vibration state of the blades on the wind turbine 150 is normal vibrations according to the second vibration signal, then confirming that the vibration suppression result is vibration suppression completed, otherwise, confirming that the vibration suppression result is vibration suppression not completed; or
if it is determined that the vibration state of the blades on the wind turbine 150 is normal vibrations according to the first vibration signal or it is determined that the vibration state of the blades on the wind turbine 150 is normal vibrations according to the second vibration signal, and the blade pitch angle of the wind turbine 150 is in a safe range, then confirming that the vibration suppression result is vibration suppression completed, otherwise, confirming that the vibration suppression result is vibration suppression not completed, where the blade pitch angle is in the safe range when it is 80 to 95 degrees; or
if it is determined that the vibration state of the blades on the wind turbine 150 is normal vibrations according to the first vibration signal, it is determined that the vibration state of the blades on the wind turbine 150 is normal vibrations according to the second vibration signal, and the blade pitch angle of the wind turbine 150 is in the safe range, then confirming that the vibration suppression result is vibration suppression completed, otherwise, confirming that the vibration suppression result is vibration suppression not completed.

In one implementation, the determining the vibration state of the blades on the wind turbine 150 according to the first vibration signal or the second vibration signal includes:
In step S10, frequency domain analysis is performed on the first vibration signal to obtain a vibration index.
In step S30, frequency domain analysis is performed on the first vibration signal or the second vibration signal respectively to obtain a corresponding vibration index.

If the vibration index is greater than a set index upper threshold, it is determined that the vibration state is abnormal vibrations; and if the vibration index is less than a set index lower threshold, it is determined that the vibration state is normal vibrations. The index upper threshold and the index lower threshold are both set according to a model of the wind turbine 150. Further, the index upper threshold and the index lower threshold are set according to the blade length of the model of the wind turbine, and specifically, the index upper threshold and the index lower threshold are obtained according to the statistics of operating data of the wind turbine.

The vibration index may be the acceleration of vibrations or the displacement amplitude of vibrations, which is not limited here. Preferably, the vibration index is the acceleration of vibrations, and accordingly, the index upper threshold and the index lower threshold are also acceleration values. Specifically, the first vibration signal obtained by the nacelle vibration detection unit 110 and the second vibration signal obtained by the sensor on the wind turbine 150 are converted from a time domain to a frequency domain, and frequency domain analysis is performed to obtain the amplitude of the signal. For example, the frequency band of the vibrations of the blades is (0.3Hz, 2.0Hz), and according to a model of the wind turbine 150, the index upper threshold is set to 0.05 and the index lower threshold is set to 0.005. If the obtained acceleration vibration index of the first vibration signal or the second vibration signal in the frequency band of the blades is greater than the index upper threshold, it is determined that the vibration state is abnormal vibrations. If the obtained acceleration vibration index is less than the index lower threshold, it is determined that the vibration state is normal vibrations.

In one implementation, the power supply control device further includes a storage battery 140, and the storage battery 140 is configured to supply power to the nacelle vibration detection unit 110 and the standby power supply start/shutdown control unit 120. The power supply control method of this embodiment further includes a battery first endurance method. The battery first endurance method includes:
setting the standby power supply 130 to automatically start based on predetermined time intervals according to an endurance duration of the storage battery 140, and setting a run duration of the standby power supply 130 after starting such that the standby power supply 130 periodically charges the storage battery 140.

According to the current state of the supply chain technology and the cost feasibility, the endurance duration of the storage battery 140 is several days to three months without charging. If extreme long-term operation is taken into account, charging is needed in the middle. For example, if it is confirmed that the longest time that the storage battery 140 can persist is about 10 days during model selection and design, then the standby power supply 130 is set to start periodically, for example, every 5 days, and the standby power supply 130 starts, it can charge the storage battery 140 and keep running for more than 2 h before it can automatically shut down, thereby ensuring the effective completion of charging.

The power supply control method of this embodiment further includes a battery second endurance method. The battery second endurance method includes:
acquiring a battery level of the storage battery, and sending the start command or the shutdown command to the standby power supply 130 according to the battery level to start the standby power supply 130 so as to charge the storage battery 140 or shut down the standby power supply 130 so as to stop charging the storage battery 140. For example, when the battery level of the storage battery 140 is lower than a first set battery level threshold, the start command is sent to the standby power supply 130. When the battery level is higher than a second set battery level threshold, the shutdown command is sent to the standby power supply 130.

The power supply control device further includes photovoltaic panels 160 and a charging/discharging controller 170 added according to the endurance duration of the storage battery 140. The power supply control method of this embodiment further includes a battery third endurance method. The battery third endurance method includes: driving the charging/discharging controller 170 to store electric energy of the photovoltaic panels 160 into the storage battery 140, and controlling the photovoltaic panels 160 to supply power to the nacelle vibration detection unit 110 and the standby power supply start/shutdown control unit 120 through the charging/discharging controller 170; and controlling, when confirming that the photovoltaic panel has no electric energy output, the storage battery to supply power to the nacelle vibration detection unit and the standby power supply start/shutdown control unit through the charging/discharging controller.

Specifically, the charging/discharging controller 170 is driven to store electric energy of the photovoltaic panels 160 into the storage battery 140 according to the battery level of the storage battery 140, and the photovoltaic panels 160 are controlled to supply power to the nacelle vibration detection unit 110 and the standby power supply start/shutdown control unit 120 through the charging/discharging controller 170. For example, when the battery level of the storage battery 140 is lower than the set threshold and the photovoltaic panels 160 are in a working state, the charging/discharging controller 170 is driven to store electric energy of the photovoltaic panels 160 into the storage battery 140, and the photovoltaic panels 160 are controlled to supply power to the nacelle vibration detection unit 110 and the standby power supply start/shutdown control unit 120 through the charging/discharging controller 170.

The power supply control method of this embodiment further includes a battery fourth endurance method, which is manual replacement. Specifically, if it is confirmed that the longest time that the storage battery 140 can persist is about 50 days during model selection and design, then the storage battery 140 may be replaced every 40 days, and the removed storage battery 140 may be charged for use next time.

The standby power supply start/shutdown control unit 120 and the nacelle vibration detection unit 110 may be integrated on the same hardware, or respectively arranged on different hardware.

The implementation software of the power supply control method of this embodiment may not be completely installed in the standby power supply control device, and the standby power supply and the standby power supply control device may be packaged into a whole to obtain an integrated standby power supply. Implementation programs of the first endurance method and the second endurance method may be located in the integrated standby power supply. It should be understood that this is a different implementation of the same method.

In this application, when the standby power supply 130 is shut down, the low-power storage battery 140 supplies power to the nacelle vibration detection unit, so that the vibrations of the wind turbine 150 can be detected. The power supplied and consumed by the storage battery 140 is in the range of 5 W to 40 W. In the case that there are vibrations of the wind turbine 150, the vibrations of the blades may be suppressed by a pitching or yawing action of the wind turbine 150, and the power consumed by this action is in the range of 10 kW to 200 kW. Only after the high-power standby power supply 130 is started can the wind turbine 150 be supplied with sufficiently high power to perform this action. That is, the storage battery 140 is an energy storage apparatus with low power consumption and low capacity, which can support vibration detection of the nacelle vibration detection unit but is not enough to support the operation of the wind turbine 150. The standby power supply 130 is an apparatus with high power and high capacity, which keeps silent at ordinary times and provides the necessary power for the wind turbine 150 to suppress the vibrations of the blades only when the wind turbine 150 vibrates. Thus, this application can save electric energy for the standby power supply 130 and ensure the standby power supply 130 to provide electric energy for suppressing vibrations to the wind turbine 150 when the vibration state of the wind turbine 150 is abnormal vibrations, and also has good economic efficiency. Thereby, this application can effectively solve the problems of short continuous high power supply to the wind turbine 150 between the hoisting and the grid connection, and poor economic efficiency in the prior art.

FIG. 9 shows a schematic structural diagram of a power supply control software system according to an embodiment of this application. Exemplarily, the power supply control software system includes: a vibration state detection module 910, a start/shutdown control module 920 and a vibration suppression result determination module 930.

The vibration state detection module 910 is configured to acquire a first vibration signal obtained by monitoring vibrations of a nacelle of a wind turbine by a nacelle vibration detection unit 110, and determine a vibration state of blades on the wind turbine 150 according to the first vibration signal.

The start/shutdown control module 920 is configured to send, when the vibration state is abnormal vibrations, a start command to the standby power supply 130; and perform a vibration suppression action after the wind turbine 150 receives power from the standby power supply 130. That is, the start command is used for driving the standby power supply 130 to start and provide electric energy to the wind turbine 150 so as to wake up the wind turbine 150, such that the wind turbine 150 performs a vibration suppression action after receiving power. The vibration suppression action includes regulating a nacelle-wind direction angle or a blade pitch angle.

The vibration suppression result determination module 930 is configured to acquire comprehensive vibration information and determine a vibration suppression result of the wind turbine 150 according to comprehensive vibration information. The comprehensive vibration information includes the first vibration signal.

The start/shutdown control module 920 is further configured to send a shutdown command to the standby power supply 130 when the vibration suppression result is vibration suppression completed. The shutdown command is used for driving the standby power supply 130 to shut down so as to stop providing electric energy to the wind turbine 150.

It can be understood that the software system of this embodiment corresponds to the power supply control method of the above embodiment, and the options in the above embodiment are also applicable to this embodiment, so the description will not be repeated here.

This application further provides a terminal apparatus. Exemplarily, the terminal apparatus includes a processor and memory. The memory stores computer programs. The processor, by running the computer programs, enables the terminal apparatus to perform functions of modules in the above power supply control method or the above power control device.

The processor may be an integrated circuit chip having signal processing capabilities. The processor may be a general-purpose processor, including at least one of a Central Processing Unit (CPU), a Graphics Processing Unit (GPU), a Network Processor (NP), a digital signal processor (DSP), an application-specific integrated circuit (ASIC), a field-programmable gate array (FPGA) or other programmable logic devices, a discrete gate or transistor logic device, and a discrete hardware component. The general-purpose processor may be a microprocessor, or the processor may also be any conventional processor, etc., that can realize or perform the methods, steps and logic block diagrams disclosed in the embodiments of this application.

The memory may be, but not limited to, a Random Access Memory (RAM), a Read Only Memory (ROM), a Programmable Read-Only Memory (PROM), an Erasable Programmable Read-Only Memory (EPROM), an Electric Erasable Programmable Read-Only Memory (EEPROM), etc. The memory is configured to store computer programs, and the processor may execute the computer programs accordingly after receiving execution instructions.

This application further provides a readable storage medium, configured to store the computer programs used in the above terminal apparatus.

In the embodiments provided by this application, it should be understood that the disclosed device and method may also be implemented in other manners. The above device embodiments are merely illustrative, for example, the flowcharts and structural diagrams in the accompanying drawings illustrate the architecture, functionality and operation of possible implementations of devices, methods and computer program products according to the embodiments of this application. In this regard, each block of the flowchart or block diagram may represent a module, a program segment, or a portion of a code that includes one or more executable instructions for implementing the specified logical functions. It should also be noted that in alternative implementations, the functions noted in the blocks may also occur in a different order from the one illustrated in the accompanying drawings. For example, two consecutive blocks may be executed substantially in parallel, and they may sometimes be executed in the reverse order, depending upon the function involved. It should also be noted that each block of the structural diagram and/or flowchart, and a combination of blocks in the structural diagram and/or flowchart, may be implemented in a special hardware-based system that performs the specified function or action, or may be implemented by a combination of special hardware and computer instructions.

In addition, the functional modules or units in the embodiments of this application may be integrated to form a separate part, or each module may exist separately, or two or more modules may be integrated to form a separate part.

When the function is implemented in the form of a software function module or sold or used as a separate product, the software function module may be stored in a computer-readable storage medium. Based on such an understanding, the technical solution of this application essentially or for the part that contributes to the prior art or all or part of the technical solution can be embodied in the form of a software product, and the computer software product is stored in a storage medium and includes several instructions used for enabling a computer apparatus (which may be a smartphone, a personal computer, a server, a network apparatus or the like) to execute all or part of the steps of the methods of the embodiments of this application. The foregoing storage medium includes: a USB flash disk, a mobile hard disk, a read-only memory (ROM), a random access memory (RAM), a magnetic disk, an optical disk, or any medium that can store program codes.

The foregoing descriptions are merely specific implementations of this application, but the protection scope of this application is not limited thereto. Any variation or replacement readily figured out by those skilled in the art within the technical scope disclosed in this application shall fall within the protection scope of this application.

## Claims

1. A standby power supply control device, **characterized by** comprising:
a nacelle vibration detection unit and a standby power supply start/shutdown control unit; wherein
the nacelle vibration detection unit is configured to monitor vibrations of a nacelle of a wind turbine and send a first vibration signal obtained by monitoring to the standby power supply start/shutdown control unit;
the standby power supply start/shutdown control unit is configured to acquire the first vibration signal, determine a vibration state of blades on the wind turbine according to the first vibration signal and send a start command to a standby power supply when the vibration state is abnormal vibrations; and
the standby power supply start/shutdown control unit is further configured to acquire comprehensive vibration information, determine a vibration suppression result of the wind turbine according to the comprehensive vibration information and send a shutdown command to the standby power supply when the vibration suppression result is vibration suppression completed so as to drive the standby power supply to shut down, the comprehensive vibration information comprising the first vibration signal.

2. The standby power supply control device according to claim 1, **characterized in that** the start command is used for driving the standby power supply to start and supply power to the wind turbine such that the wind turbine performs a vibration suppression action according to a built-in vibration suppression action policy of the wind turbine, the vibration suppression action comprising regulating a blade pitch angle or a nacelle-wind direction angle;
the standby power supply start/shutdown control unit is further configured to be communicatively connected to the wind turbine; the comprehensive vibration information comprises a second vibration signal and state information obtained by monitoring the wind turbine; and
when acquiring the comprehensive vibration information and determining the vibration suppression result of the wind turbine according to the comprehensive vibration information, the standby power supply start/shutdown control unit is specifically configured to:
acquire the first vibration signal obtained by monitoring the vibrations of the nacelle from the nacelle vibration detection unit;
acquire the second vibration signal and/or the state information from the wind turbine; and
determine the vibration suppression result according to the first vibration signal, the second vibration signal and the state information.

3. The standby power supply control device according to claim 2, **characterized in that** when determining the vibration suppression result according to the first vibration signal, the second vibration signal and the state information, the standby power supply start/shutdown control unit is specifically configured to:
confirm, when a first condition is met, that the vibration suppression result is vibration suppression completed, otherwise, confirm that the vibration suppression result is vibration suppression not completed; wherein the first condition comprises: determining that the vibration state of the blades on the wind turbine is normal vibrations according to the first vibration signal, and/or determining that the vibration state of the blades on the wind turbine is normal vibrations according to the second vibration signal; or
confirm, when the first condition is met and a second condition is met, that the vibration suppression result is vibration suppression completed, otherwise, confirm that the vibration suppression result is vibration suppression not completed; wherein the second condition comprises the blade pitch angle of the wind turbine being in a safe range; and the state information comprises the blade pitch angle.

4. The standby power supply control device according to claim 3, **characterized in that** when determining the vibration state of the blades on the wind turbine, the standby power supply start/shutdown control unit is specifically configured to:
perform frequency domain analysis on the first vibration signal or the second vibration signal to obtain a corresponding vibration index;
determine, if the vibration index is greater than a set index upper threshold, that the vibration state is abnormal vibrations; and
determine, if the vibration index is less than a set index lower threshold, that the vibration state is normal vibrations;
wherein the index upper threshold and the index lower threshold are both set according to a model of the wind turbine.

5. The standby power supply control device according to claim 1, **characterized in that** the device further comprises a storage battery, and the storage battery is configured to supply power to the nacelle vibration detection unit and the standby power supply start/shutdown control unit;
the standby power supply start/shutdown control unit is further configured to drive the standby power supply to charge the storage battery according to a battery first endurance method; and the battery first endurance method comprises:
setting the standby power supply to automatically start based on predetermined time intervals according to an endurance duration of the storage battery, and setting a run duration of the standby power supply after starting such that the standby power supply periodically charges the storage battery.

6. The standby power supply control device according to claim 5, **characterized in that** the standby power supply start/shutdown control unit is further configured to drive the standby power supply to charge the storage battery according to a battery second endurance method; and the battery second endurance method comprises:
acquiring a battery level of the storage battery, and sending the start command or the shutdown command to the standby power supply according to the battery level to start or shut down the standby power supply, so as to charge or stop charging the storage battery.

7. The standby power supply control device according to claim 5 or 6, **characterized in that** the device further comprises: photovoltaic panels and a charging/discharging controller added according to the endurance duration of the storage battery; the standby power supply start/shutdown control unit is further configured to drive the standby power supply to charge the storage battery according to a battery third endurance method; and the battery third endurance method comprises:
driving the charging/discharging controller to store electric energy of the photovoltaic panels into the storage battery, and controlling the photovoltaic panels to supply power to the nacelle vibration detection unit and the standby power supply start/shutdown control unit through the charging/discharging controller; and controlling, when confirming that the photovoltaic panel has no electric energy output, the storage battery to supply power to the nacelle vibration detection unit and the standby power supply start/shutdown control unit through the charging/discharging controller.

8. A power supply system, **characterized in that** the power supply system comprises a standby power supply and a standby power supply control device according to any of claims 1 to 7, wherein the standby power supply control device is configured to control the standby power supply to start or shut down;
the standby power supply is configured to supply power to a wind turbine according to a start command so as to drive the wind turbine to perform a vibration suppression action; and
the standby power supply is further configured to shut down according to the shutdown command so as to stop providing electric energy to the wind turbine.

9. A wind turbine generator system, **characterized in that** the wind turbine generator system comprises a wind turbine and a power supply system according to claim 8, wherein the power supply system is configured to supply power to the wind turbine.

10. A power supply control method applicable to a standby power supply control device according to any of claims 1 to 7, **characterized in that** the power supply control method comprises:
acquiring a first vibration signal obtained by monitoring vibrations of a nacelle of a wind turbine by a nacelle vibration detection unit, and determining a vibration state of blades on the wind turbine according to the first vibration signal;
sending, if the vibration state is abnormal vibrations, a start command to a standby power supply; and
acquiring comprehensive vibration information, determining a vibration suppression result of the wind turbine according to the comprehensive vibration information, and sending a shutdown command to the standby power supply when the vibration suppression result is vibration suppression completed, the comprehensive vibration information comprising the first vibration signal, and the shutdown command being used for driving the standby power supply to shut down.
